# EUROPEAN PATENT APPLICATION

(11) **EP 2 277 406 A1**
(43) Date of publication of application: **26.01.2011**
(21) Application number: 09745371.6
(22) Date of filing: 08.05.2009
(51) Int. Cl.: A45C 11/00, G06F 1/16

(54) **PROTECTING COAT**

(30) Priority: 14.05.2008 CN 200820047731 U
(71) Applicant: Tang, Zhengcai, Dongguan, Guangdong 523620 (CN)
(72) Inventor: Tang, Zhengcai, Dongguan, Guangdong 523620 (CN)
(74) Representative: Stuttard, Garry Philip
(86) International application number: PCT/CN2009/000503
(87) International publication number: WO 2009/137987

(57) **Abstract**

A protecting coat includes an upper cover (1) and a base (2) . One end of the upper cover (1) is connected with the base (2) through a soft piece (3) . The upper cover (1) has a flat plate shape and the other end of the upper cover (1) has a bended fastener (4) . The middle portion of the base (2) has a flat plate shape and the edges of the base (2) are turned up The four corners (21) of the base (2) protrude upwards to form claws bent inwards.

## Description

This invention relates to a protecting coat, and more particularly to an electronic device protecting coat.

With the advancement of portable electronic devices, devices utilizing large LCD and OLED display also acting as human interface, such as personal multimedia players (PMP), satellite navigation device (GPS), and touch-screen mobile phones have appeared in the market. Such products require a protecting coat design, which can protect the device and its display screen and while facilitating easy viewing of the display and easy user interface operation.

In view of the lack of the above-described features in the current technological field, it is an objective of the invention to provide a protecting cover in order to facilitate protection, easy viewing and user operation of an enclosed portable electronic device.

To achieve the above objective, the present invention provides a protecting coat, comprising an upper cover and a base; one end of the upper cover and one end of the base are connected by a soft piece; the upper cover is a flat plate shape piece with the other end forming an bended fastener; the base has a flat plate shape center portion, upwardly curved edge portions, and upwardly and inwardly curved, claw-shaped corner portions.

The upper cover and/or the base are made essentially with injection molded plastic, exterior of which can be covered with materials such as leather, artificial leather or textile, and interior of which can be lined with soft lining materials.

The soft piece connecting the upper cover and the base can have a rectangular opening.

Based on the technical solutions described above, the upper cover is formed of rigid plastic materials. When the upper cover is folded backwards behind a portable electronic device in the protecting coat, the upper cover forms an angled bracket, enabling consumers to place the device on a tabletop at a desirable viewing angle; when the upper cover is closed with the base, it becomes a case as the edges of the upper cover snap into the claws of the base. The rigid plastic material and the soft lining materials on the interior side provide protecting effect to the enclosed device against scratching, bumping and impact. The bended fastener on the upper cover allows the upper cover securely enclose onto the electronic device preventing from falling out or sliding.

Detailed description will be given below with reference to accompanying drawings, in which:

FIG. 1 is a schematic view when the upper cover is closed onto the base; and

FIG. 2 is a schematic view when the upper cover is open from the base.

The protecting coat is further described in details with respect to the following embodiments.

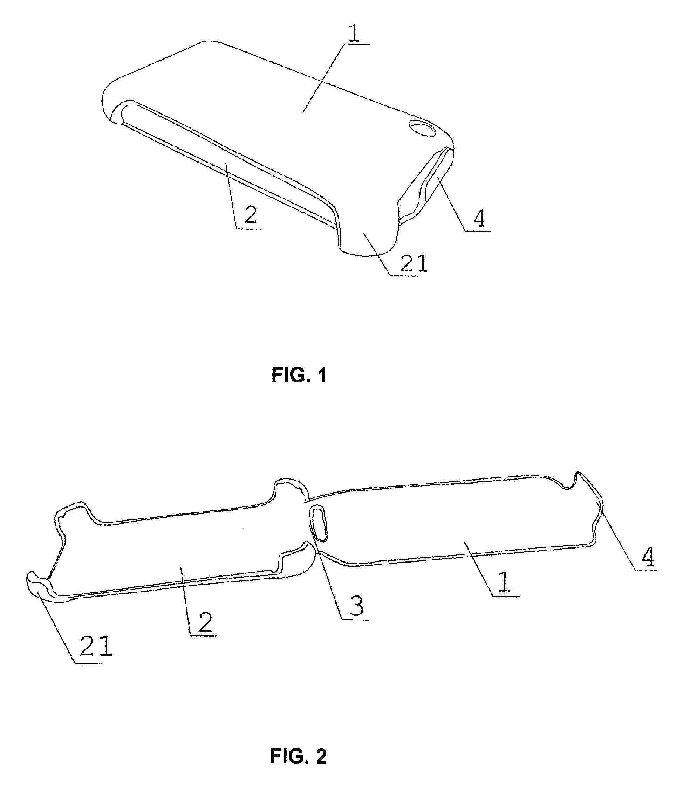

As shown in FIGS. 1-2, the protecting coat comprises an upper cover 1 and a base 2, the upper cover 1 and base 2 connected with a soft piece 3, wherein the upper cover 1 is flat plate shape and one of its ends forms an bended fastener 4; the base 2, is flat in the center with the edges or corners upturned, and corners 21 protruding upward to form inward curved claw-like protrusions. The base is form fitted to an enclosed device. The inward curved claws are shaped to hold the enclosed device in place securely, and to prevent the device from falling out or sliding within the base which can cause scratching of the device's surface finish.

The base 2 is made with plastic injection molded process to form a injection molded plastic part with four protruding corners and edges that are a perfect fit for the enclosed portable electronic device. This perfect fit allows the enclosed portable electronic device to be secured to the base. The base has its exterior covered with materials such as leather, artificial leather or textile, and its interior lined with soft lining materials, thereby protects against surface scratches or damages of the enclosed portable device.

The upper cover 1 is made of injection molded plastic, with the exterior covered with materials such as leather, artificial leather or textile. One end of the upper cover is shaped to the contour of the enclosed portable electronic device to form a clamping clip to keep the upper cover attached to the device when the upper cover is in closed position. The upper cover protects the display screen from being scratched or damaged.

In a preferred embodiment, the soft piece connecting the upper cover and the base has a rectangular opening that allows connection of the portable electronic device to accessories.

Due to the rigid plastic structure of the upper cover, when the upper cover is folded back and placed behind the enclosed portable electronic device, it can form a bracket that serves as a stand at various angles. This allows consumers to place the device on a tabletop for easy viewing.

Detailed description and detailed implementation herein above is an explanation of the embodiments of the present invention. The present invention is not limited to the scope of such detailed description and detailed implementation. It will be appreciated that those skilled in the art will realize various simple deduction or alternation, which falls within the true scope of the invention. Therefore, the aim in the appended claims is to cover all such changes and modifications that fall within the true spirit and scope of the invention.

## Claims

1. A protecting coat, comprising an upper cover and a base; wherein, said upper cover and base are connected by a soft piece; said upper cover is flat plate shape and one end of said upper cover has a bended fastener; said base has a flat plate shape center portion, upwardly curved edge portions and four upwardly and inwardly curved, claw-shaped corner portions.

2. A protecting coat, as recited in claim 1, wherein said upper cover and/or base are made of injection molded plastic, the exterior of said protecting coat is covered with materials such as leather, artificial leather or a textile material, the interior of the coat is lined with a soft lining material.

3. A protecting coat according to claim 2 wherein the soft piece connecting the upper cover and the base has a rectangular opening.
